# EUROPEAN PATENT SPECIFICATION

(11) **EP 4 083 747 B1**
(45) Date of publication and mention of the grant of the patent: **17.04.2024**
(21) Application number: 21748156.3
(22) Date of filing: 14.01.2021
(51) Int. Cl.: G06F 1/16, G02B 1/14, G02B 13/00

(54) **ELECTRONIC DEVICE INCLUDING DISPLAY**
ELEKTRONISCHE VORRICHTUNG MIT ANZEIGE
DISPOSITIF ÉLECTRONIQUE COMPRENANT UN DISPOSITIF D'AFFICHAGE

(30) Priority: 31.01.2020 KR 20200011624
(43) Date of publication of application: 02.11.2022
(73) Proprietor: Samsung Electronics Co., Ltd., Suwon-si, Gyeonggi-do 16677 (KR)
(72) Inventor: JUNG, Hyunsuk, Suwon-si, Gyeonggi-do 16677 (KR)
(74) Representative: Gulde & Partner
(86) International application number: PCT/KR2021/000512
(87) International publication number: WO 2021/153930

(56) References cited:
- KR-A- 20060 020 537
- KR-A- 20140 033 808
- KR-A- 20170 051 854
- KR-A- 20180 130 151
- US-A1- 2006 044 490
- US-A1- 2013 316 133
- US-A1- 2015 163 382
- US-A1- 2017 115 702
- US-B1- 9 292 128
- US-B2- 10 386 892

## Description

### [Technical Field]

Various embodiments of the disclosure relate to an electronic device including a display.

### [Background Art]

An electronic device has gradually become slimmer, and has been improved so as to increase stiffness, reinforce the design aspect, and differentiate functional elements thereof at the same time. The electronic device has been deviated from the uniform rectangular shape, and has been gradually changed to various shapes. The electronic device may have a transformable structure which is convenient to carry and which can use a large-screen display in case of being used. For example, as part of the transformable structure, the electronic device may include at least two foldable housings which operate to fold or unfold each other, and which support a flexible display.

### [Disclosure of Invention]

### [Technical Problem]

A foldable electronic device may include a hinge module, and a first housing and a second housing which are connected in a direction in which they face each other through the hinge module. Such a foldable electronic device may operate in an in-folding and/or out-folding manner that the first housing is rotated within a range of 0 to 360 degrees against the second housing through the hinge module. The foldable electronic device may include a flexible display disposed to cross the first housing and the second housing in a 180-degree unfolded state of the foldable electronic device.

In order to provide a support power (stiffness) in accordance with a user's touch while maintaining the bending characteristic, the flexible display may include a window layer disposed on an upper part of a display panel, and at least one protection layer disposed on an upper part of the window layer in order to protect the window layer.

Further, the electronic device may include a sensor module or a camera device disposed in an inner space thereof. The camera device may be disposed under the display panel, and may detect an external environment through at least one opening (e.g., through-hole) formed on the display panel to secure permeability. The at least one opening may be covered by the window layer and/or the protection layer laminated on the display panel.

However, in case that pollution, such as scratch, occurs in an area corresponding to the at least one opening, the protection layer should be replaced as a whole to prevent the performance of the camera device from being degraded, and this may cause a problem that an expensive cost is incurred. Further, if the window that is made of a glass material is damaged in a state where the corresponding area of the protection layer corresponding to the opening is removed, risk of scattering may occur, and there may be a problem that the support force (stiffness) for the corresponding part is weakened.

US 2013/316133 A1, US 10,386,892 B2, US 2017/115702 A1 and US 9,292,128 B1 relate to a portable electronic device having a protective film attached to the display, with through-holes for a speaker, camera, microphone. US 2015/163382 A1 relates to a mobile device with a cover glass, whereby the cover glass in front of the camera is thinner than the rest of the cover glass. The thinner part is separate from the rest of the cover glass, but it is not intended to be peelable by the user. When the thinner part is damaged, the whole cover glass still has to be replaced.

Various embodiments of the disclosure provide an electronic device including a display.

Various embodiments of the disclosure provide an electronic device including a display having a partial peeling structure capable of reinforcing stiffness for a corresponding area of a protection layer corresponding to an opening of a display panel and preventing scratch or risk of scattering due to the damage of the window layer.

Various embodiments of the disclosure provide an electronic device including a display capable of helping cost saving by implementing a corresponding area of a protection layer corresponding to an opening of a display panel in a partially replaceable manner.

### [Solution to Problem]

A first aspect of the present disclosure is an electronic device comprising: a housing; a flexible display disposed to be viewable from an outside of the electronic device through at least a part of the housing, the flexible display including: a display panel including a first opening; a window layer laminated on a surface of the display panel facing the outside of the electronic device; and a protection layer laminated on surface of the window layer facing the outside of the electronic device; and a camera device disposed to be substantially aligned with the first opening, wherein when the flexible display is viewed from the outside, the protection layer includes a peeling part configured to overlap at least a viewing angle of the camera device and disposed to be separable from the protection layer.

Preferably, the peeling part and the protection layer are composed of the same material.

Preferably, the peeling part is disposed to be separable through a separation part formed on a boundary part of a neighboring area of the protection layer.

Preferably, the separation part comprises at least one separation groove formed lower than the neighboring area from an surface of the protection layer facing the outside of the electronic device and/or a surface of the protection layer facing the inside of the electronic device.

Preferably, the separation part comprises a sheath area or a punching area dividing the peeling part and the neighboring area from each other.

Preferably, the peeling part is disposed through a separation space separating the peeling part from the neighboring area at designated intervals.

Preferably, the electronic device further comprises an intermediate protection layer, composed of a first material, being laminated between the surface of the window layer facing the outside of the electronic device and the surface of the protection layer facing the inside of the electronic device.

Preferably, the first material comprises polyethylene terephthalate, PET, or polyimide, PI.

Preferably, the protection layer is composed of a second material comprising thermoplastic polyurethane, TPU.

Preferably, the intermediate protection layer is disposed so that an edge of the intermediate protection layer is not seen from the outside through the housing.

Preferably, the intermediate protection layer and the protection layer are disposed so that edges of the intermediate protection layer and the protection layer are not seen from the outside through the housing.

Preferably, the peeling part is disposed on at least a part of a through-hole formed on the protection layer, overlapping at least the viewing angle of the camera device.

Preferably, the peeling part is formed of the first material.

Preferably, the window layer is formed of glass or polymer.

Preferably, the flexible display further comprises at least one sub-material layer laminated on a rear surface of the display panel, and the sub-material layer includes a second opening formed to accommodate at least a part of the camera device in an area corresponding to the first opening.

### [Advantageous Effects of Invention]

Since various embodiments of the disclosure are configured to have a structure in which the corresponding area of the protection layer corresponding to the opening of the display panel can be peeled at least partly, and can be replaced by a new peeling part, the performance of the sensor module or the camera device can be prevented from being degraded due to the scratch, and thus the support power (stiffness) can be improved through the peeling part. Further, it is possible to prevent the risk of scattering due to the damage of the window layer made of the glass material, and to help the cost saving.

### [Brief Description of Drawings]

In relation to the description of the drawings, the same or similar reference numerals may be used for the same or similar constituent elements.
FIG. 1A is a front perspective view of an electronic device illustrating an unfolded state (or flat stage) according to various embodiments of the disclosure.
FIG. 1B is a plan view illustrating a front surface of an electronic device in an unfolded state according to various embodiments of the disclosure.
FIG. 1C is a plan view illustrating a rear surface of an electronic device in an unfolded state according to various embodiments of the disclosure.
FIG. 2A is a perspective view of an electronic device illustrating a folded state according to various embodiments of the disclosure.
FIG. 2B is a perspective view of an electronic device illustrating an intermediate state according to various embodiments of the disclosure.
FIG. 3 is an exploded perspective view of an electronic device according to various embodiments of the disclosure.
FIG. 4 is an exploded perspective view of a display according to various embodiments of the disclosure.
FIG. 5 is a cross-sectional view of an electronic device as viewed along line 5-5 of FIG. 1A according to various embodiments of the disclosure.
FIG. 6 is a partial configuration diagram of a display including a peeling part according to various embodiments of the disclosure.
FIG. 7 is an exploded perspective view of a display according to various embodiments of the disclosure.
FIG. 8 is a cross-sectional view of an electronic device as viewed along line 8-8 of FIG. 1A according to various embodiments of the disclosure.
FIG. 9 is a partial configuration diagram of a display including a peeling part according to various embodiments of the disclosure.
FIGS. 10A to 10C are partial cross-sectional views of the protection layer as viewed along line 10-10 of FIG. 9 according to various embodiments of the disclosure.
FIGS. 11A to 11D are partial configuration diagrams of a display including a peeling part with a size corresponding to a viewing angle according to various embodiments of the disclosure.
FIG. 12 is a partial configuration diagram of a display including a peeling part with a size that is larger than a viewing angle according to various embodiments of the disclosure.

### [Mode for the Invention]

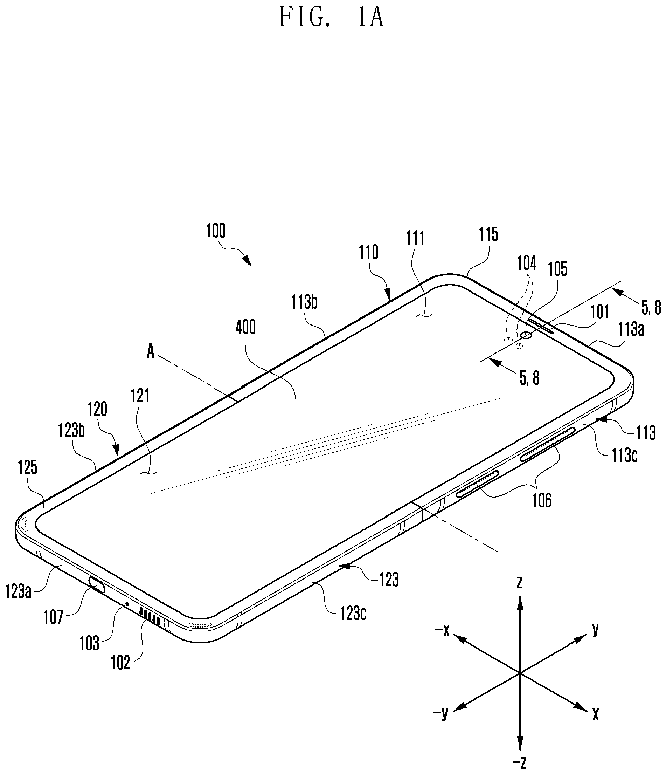

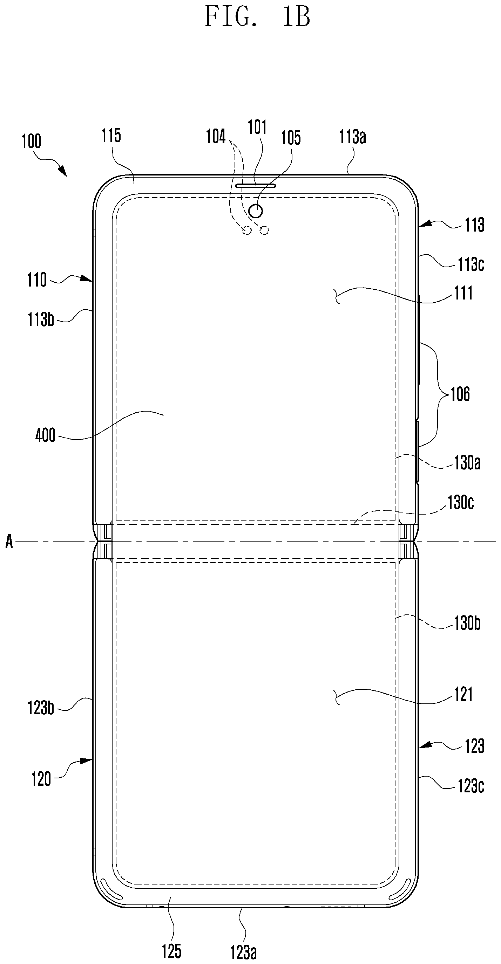

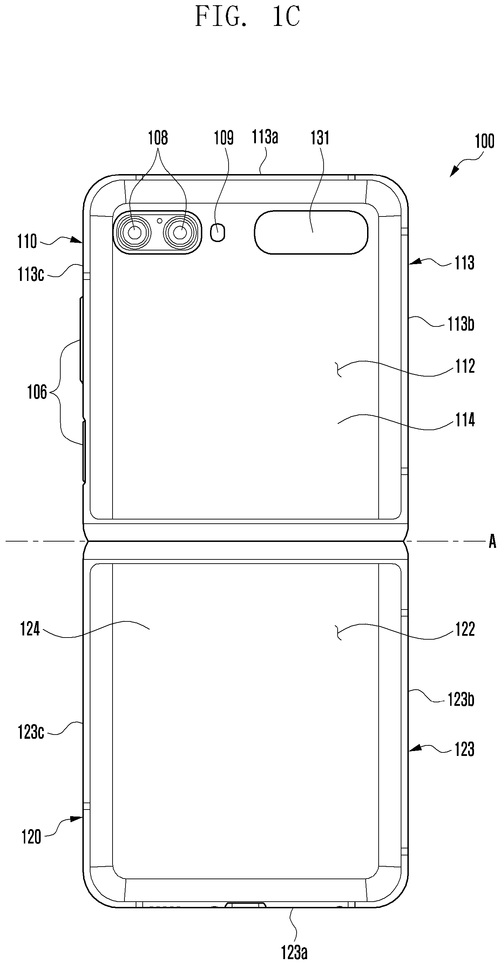

FIG. 1A is a front perspective view of an electronic device in a flat or unfolded state according to certain embodiments of the disclosure. FIG. 1B is a plan view illustrating the front of the electronic device in an unfolded state according to certain embodiments of the disclosure. FIG. 1C is a plan view illustrating the back of the electronic device in an unfolded state according to certain embodiments of the disclosure.

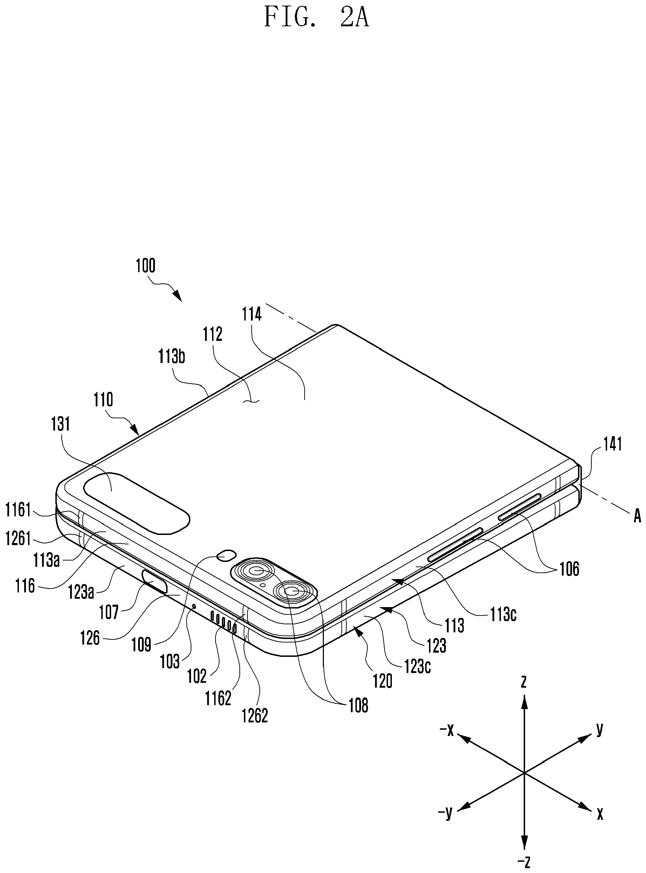

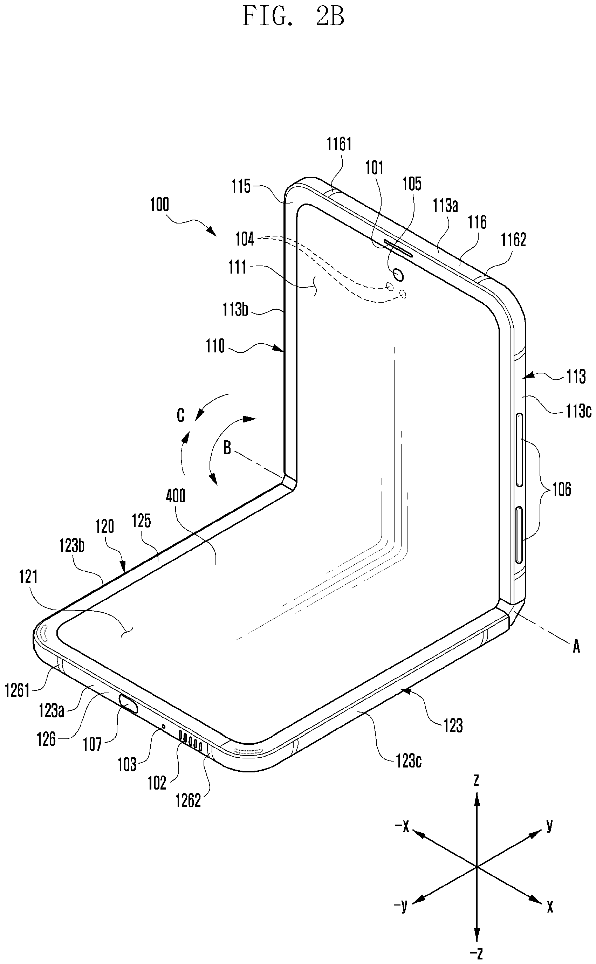

FIG. 2A is a perspective view of the electronic device in a folded state according to certain embodiments of the disclosure. FIG. 2B is a perspective view of the electronic device in an intermediate state according to certain embodiments of the disclosure.

With reference to FIGS. 1A to 2B, the electronic device 100 may include a pair of housings 110 and 120 (e.g., foldable housings) that are rotatably coupled as to allow folding relative to a hinge mechanism (e.g., hinge mechanism 140 in FIG. 1B) . In certain embodiments, the hinge mechanism (e.g., hinge mechanism 140 in FIG. 1B) may be disposed in the X-axis direction or in the Y-axis direction. In certain embodiments, two or more hinge mechanisms (e.g., hinge mechanism 140 in FIG. 1B) may be arranged to be folded in a same direction or in different directions. According to an embodiment, the electronic device 100 may include a flexible display 400 (e.g., foldable display) disposed in an area formed by the pair of housings 110 and 120. According to an embodiment, the first housing 110 and the second housing 120 may be disposed on both sides about the folding axis (axis A), and may have a substantially symmetrical shape with respect to the folding axis (axis A). According to an embodiment, the angle or distance between the first housing 110 and the second housing 120 may vary, depending on whether the state of the electronic device 100 is a flat or unfolded state, a folded state, or an intermediate state.

According to certain embodiments, the pair of housings 110 and 120 may include a first housing 110 (e.g., first housing structure) coupled to the hinge mechanism (e.g., hinge mechanism 140 in FIG. 1B), and a second housing 120 (e.g., second housing structure) coupled to the hinge mechanism (e.g., hinge mechanism 140 in FIG. 1B). According to an embodiment, in the unfolded state, the first housing 110 may include a first surface 111 facing a first direction (e.g., front direction) (z-axis direction), and a second surface 112 facing a second direction (e.g., rear direction) (negative z-axis direction) opposite to the first surface 111. According to an embodiment, in the unfolded state, the second housing 120 may include a third surface 121 facing the first direction (z-axis direction), and a fourth surface 122 facing the second direction (negative z-axis direction). According to an embodiment, the electronic device 100 may be operated in such a manner that the first surface 111 of the first housing 110 and the third surface 121 of the second housing 120 face substantially the same first direction (z-axis direction) in the unfolded state, and the first surface 111 and the third surface 121 face one another in the folded state. According to an embodiment, the electronic device 100 may be operated in such a manner that the second surface 112 of the first housing 110 and the fourth surface 122 of the second housing 120 face substantially the same second direction (negative z-axis direction) in the unfolded state, and the second surface 112 and the fourth surface 122 face one another in opposite directions in the folded state. For example, in the folded state, the second surface 112 may face the first direction (z-axis direction), and the fourth surface 122 may face the second direction (negative z-axis direction).

According to certain embodiments, the first housing 110 may include a first side member 113 that at least partially forms an external appearance of the electronic device 100, and a first rear cover 114 coupled to the first side member 113 that forms at least a portion of the second surface 112 of the electronic device 100. According to an embodiment, the first side member 113 may include a first side surface 113a, a second side surface 113b extending from one end of the first side surface 113 a, and a third side surface 113c extending from the other end of the first side surface 113a. According to an embodiment, the first side member 113 may be formed in a rectangular shape (e.g., square or rectangle) through the first side surface 113a, second side surface 113b, and third side surface 113c.

According to certain embodiments, the second housing 120 may include a second side member 123 that at least partially forms the external appearance of the electronic device 100, and a second rear cover 124 coupled to the second side member 123, forming at least a portion of the fourth surface 122 of the electronic device 100. According to an embodiment, the second side member 123 may include a fourth side surface 123a, a fifth side surface 123b extending from one end of the fourth side surface 123a, and a sixth side surface 123c extending from the other end of the fourth side surface 123a. According to an embodiment, the second side member 123 may be formed in a rectangular shape through the fourth side surface 123a, fifth side surface 123b, and sixth side surface 123c.

According to certain embodiments, the pair of housings 110 and 120 are not limited to the shape and combinations illustrated herein, and may be implemented with a combination of other shapes or parts. For example, in certain embodiments, the first side member 113 may be integrally formed with the first rear cover 114, and the second side member 123 may be integrally formed with the second rear cover 124.

According to certain embodiments, in the unfolded state of the electronic device 100, the second side surface 113b of the first side member 113 and the fifth side surface 123b of the second side member 123 may be connected without a gap formed therebetween. According to an embodiment, in the unfolded state of the electronic device 100, the third side surface 113c of the first side member 113 and the sixth side surface 123c of the second side member 123 may be connected without a gap formed therebetween. According to an embodiment, in the unfolded state, the electronic device 100 may be configured such that the combined length of the second side surface 113b and the fifth side surface 123b is longer than the combined length of the first side surface 113a and/or the fourth side surface 123a. In addition, the combined length of the third side surface 113c and the sixth side surface 123c may be configured to be longer than the length of the first side surface 113a and/or the fourth side surface 123a.

According to certain embodiments, the first side member 113 and/or the second side member 123 may be formed of a metal, and may further include a polymer injected into the metal. According to an embodiment, the first side member 113 and/or the second side member 123 may include at least one conductive portion 116 and/or 126 electrically segmented through one or more segmenting portions 1161 and 1162 and/or segmenting 1261 and 1262, which may be formed using a polymer. In this case, the at least one conductive portion may be electrically connected to a wireless communication circuit included in the electronic device 100, and may be used as an antenna operating in at least one designated band (e.g., legacy band).

According to certain embodiments, the first rear cover 114 and/or the second rear cover 124 may be formed of, for example, coated or tinted glass, ceramic, polymer, metal (e.g., aluminum, stainless steel or "STS", or magnesium), or a combination thereof.

According to certain embodiments, the flexible display 400 may be disposed to extend from the first surface 111 of the first housing 110 across the hinge mechanism (e.g., hinge mechanism 140 in FIG. 1B) to at least a portion of the third surface 121 of the second housing 120. For example, the flexible display 400 may include a first region 130a substantially corresponding to the first surface 111, a second region 130b corresponding to the second surface 121, and a third region 130c (e.g., the bendable region) connecting the first region 130a and the second region 130b and corresponding to the hinge mechanism (e.g., hinge mechanism 140 in FIG. 1B). According to an embodiment, the electronic device 100 may include a first protection cover 115 (e.g., first protection frame or first decoration member) coupled along the periphery of the first housing 110. According to an embodiment, the electronic device 100 may include a second protection cover 125 (e.g., second protection frame or second decoration member) coupled along the periphery of the second housing 120. According to an embodiment, the first protection cover 115 and/or the second protection cover 125 may be formed of a metal or polymer material. According to an embodiment, the first protection cover 115 and/or the second protection cover 125 may be used as a decorative member. According to an embodiment, the flexible display 400 may be positioned such that the periphery of the first region 130a is interposed between the first housing 110 and the first protection cover 115. According to an embodiment, the flexible display 400 may be positioned such that the periphery of the second region 130b is interposed between the second housing 120 and the second protection cover 125. According to an embodiment, the flexible display 400 may be positioned such that the periphery of the flexible display 400 corresponding to a protection cap 135 is protected through the protection cap disposed in a region corresponding to the hinge mechanism (e.g., hinge mechanism 140 in FIG. 1B). Consequently, the periphery of the flexible display 400 may be substantially protected from the outside. According to an embodiment, the electronic device 100 may include a hinge housing 141 (e.g., hinge cover) that is disposed so as to support the hinge mechanism (e.g., hinge mechanism 140 in FIG. 1B). The hinge housing 141 may further be exposed to the outside when the electronic device 100 is in the folded state, and be invisible as viewed from the outside when retracted into a first space (e.g., internal space of the first housing 110 ) and a second space (e.g., internal space of the second housing 120) when the electronic device 100 is in the unfolded state. In certain embodiments, the flexible display 400 may be disposed to extend from at least a portion of the second surface 112 to at least a portion of the fourth surface 122. In this case, the electronic device 100 may be folded so that the flexible display 400 is exposed to the outside (out-folding scheme).

According to certain embodiments, the electronic device 100 may include a sub-display 131 disposed separately from the flexible display 400. According to an embodiment, the sub-display 131 may be disposed to be at least partially exposed on the second surface 112 of the first housing 110, and may display status information of the electronic device 100 in place of the display function of the flexible display 400 in case of the folded state. According to an embodiment, the sub-display 131 may be disposed to be visible from the outside through at least some region of the first rear cover 114. In certain embodiments, the sub-display 131 may be disposed on the fourth surface 122 of the second housing 120. In this case, the sub-display 131 may be disposed to be visible from the outside through at least some region of the second rear cover 124.

According to certain embodiments, the electronic device 100 may include at least one of an input device 103 (e.g., microphone), sound output devices 101 and 102, a sensor module 104, camera devices 105 and 108, a key input device 106, or a connector port 107. In the illustrated embodiment, the input device 103 (e.g., microphone), sound output devices 101 and 102, sensor module 104, camera devices 105 and 108, key input device 106, and connector port 107 indicate a hole or shape formed in the first housing 110 or the second housing 120, but may be defined to include a substantial electronic component (e.g., input device, sound output device, sensor module, or camera device) that is disposed inside the electronic device 100 and operated through a hole or a shape.

According to certain embodiments, the input device 103 may include at least one microphone disposed on the second housing 120. In certain embodiments, the input device 103 may include a plurality of microphones disposed to detect the direction of a sound. In certain embodiments, a plurality of microphones may be disposed at appropriate positions in the first housing 110 and/or the second housing 120. According to an embodiment, the sound output devices 101 and 102 may include speakers. According to an embodiment, the input device 103 may include a receiver for calls disposed in the first housing 110, and a speaker disposed in the second housing 120. In certain embodiments, the input device 103, the sound output devices 101 and 102, and the connector port 107 may be disposed in a space arranged in the first housing 110 and/or the second housing 120 of the electronic device 100, and may be exposed to the external environment through at least one hole formed in the first housing 110 and/or the second housing 120. According to an embodiment, at least one connector port 107 may be used to transmit and receive power and/or data to and from an external electronic device. In certain embodiments, at least one connector port (e.g., ear jack hole) may accommodate a connector (e.g., ear jack) for transmitting and receiving an audio signal to and from an external electronic device. In certain embodiments, the hole formed in the first housing 110 and/or the second housing 120 may be commonly used for the input device 103 and the sound output devices 101 and 102. In certain embodiments, the sound output devices 101 and 102 may include a speaker (e.g., piezo speaker) that operates without using a hole formed in the first housing 110 and/or the second housing 120.

According to certain embodiments, the sensor module 104 may generate an electrical signal or data value corresponding to an internal operating state of the electronic device 100 or an external environmental state. The sensor module 104 may detect an external environment, for example, through the first surface 111 of the first housing 110. In certain embodiments, the electronic device 100 may further include at least one sensor module disposed to detect an external environment through the second surface 112 of the first housing 110. According to an embodiment, the sensor module 104 (e.g., illuminance sensor) may be disposed under the flexible display 400 to detect an external environment through the flexible display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 104.

According to certain embodiments, the camera devices 105 and 108 may include a first camera device 105 (e.g., front camera device) disposed on the first surface 111 of the first housing 110, and a second camera device 108 disposed on the second surface 112 of the first housing 110. The electronic device 100 may further include a flash 109 disposed close to the second camera device 108. According to an embodiment, the camera device 105 or 108 may include one or more lenses, an image sensor, and/or an image signal processor. The flash 109 may include, for example, a light emitting diode or a xenon lamp. According to an embodiment, the camera devices 105 and 108 may be arranged so that two or more lenses (e.g., wide-angle lens, super-wide-angle lens, or telephoto lens) and image sensors are positioned on one surface (e.g., first surface 111, second surface 112, third surface 121, or fourth surface 122) of the electronic device 100. In certain embodiments, the camera devices 105 and 108 may include time-of-flight (TOF) lenses and/or an image sensor.

According to certain embodiments, the key input device 106 (e.g., key button) may be disposed on the third side surface 113c of the first side member 113 of the first housing 110. In certain embodiments, the key input device 106 may be disposed on at least one of the other side surfaces 113a and 113b of the first housing 110 and/or the side surfaces 123a, 123b and 123c of the second housing 120. In certain embodiments, the electronic device 100 may not include some or all of the key input devices 106, and those not included key input devices 106 may be implemented in other forms, such as soft keys, on the flexible display 400. In certain embodiments, the key input device 106 may be implemented by using a pressure sensor included in the flexible display 400.

According to certain embodiments, some of the camera devices 105 and 108 (e.g., first camera device 105) or the sensor module 104 may be disposed to be exposed through the flexible display 400. For example, the first camera device 105 or the sensor module 104 may be arranged in the internal space of the electronic device 100 so as to be in contact with the external environment through an opening (e.g., through hole) formed at least partially in the flexible display 400. In another embodiment, some sensor modules 104 may be arranged in the internal space of the electronic device 100 so as to perform their functions without being visually exposed through the flexible display 400. For example, in this case, the opening of a region of the flexible display 400 facing the sensor module may be not needed.

With reference to FIG. 2B, the electronic device 100 may be operated to remain in an intermediate state through the hinge mechanism (e.g., hinge device 140 in FIG. 1B). In this case, the electronic device 100 may control the flexible display 400 to display different pieces of content on the display area corresponding to the first surface 111 and the display area corresponding to the third surface 121. According to an embodiment, the electronic device 100 may be operated substantially in an unfolded state (e.g., unfolded state of FIG. 1A) and/or substantially in a folded state (e.g., folded state of FIG. 2A) with respect to a specific inflection angle (e.g., angle between the first housing 110 and the second housing 120 in the intermediate state) through the hinge mechanism (e.g., hinge mechanism 140 in FIG. 1B). For example, when a pressing force is applied in the unfolding direction (B direction) in a state where the electronic device 100 is unfolded at a specific inflection angle, through the hinge mechanism (e.g., hinge mechanism 140 in FIG. 1B), the electronic device 100 may be transitioned to an unfolded state (e.g., unfolded state of FIG. 1A). For example, when a pressing force is applied in the folding direction (C direction) in a state where the electronic device 100 is unfolded at a specific inflection angle, through the hinge mechanism (e.g., hinge mechanism 140 in FIG. 1B), the electronic device 100 may be transitioned to a closed state (e.g., folded state of FIG. 2A). In an embodiment, the electronic device 100 may be operated to remain in an unfolded state at various angles (not shown) through the hinge mechanism (e.g., hinge mechanism 140 in FIG. 1B).

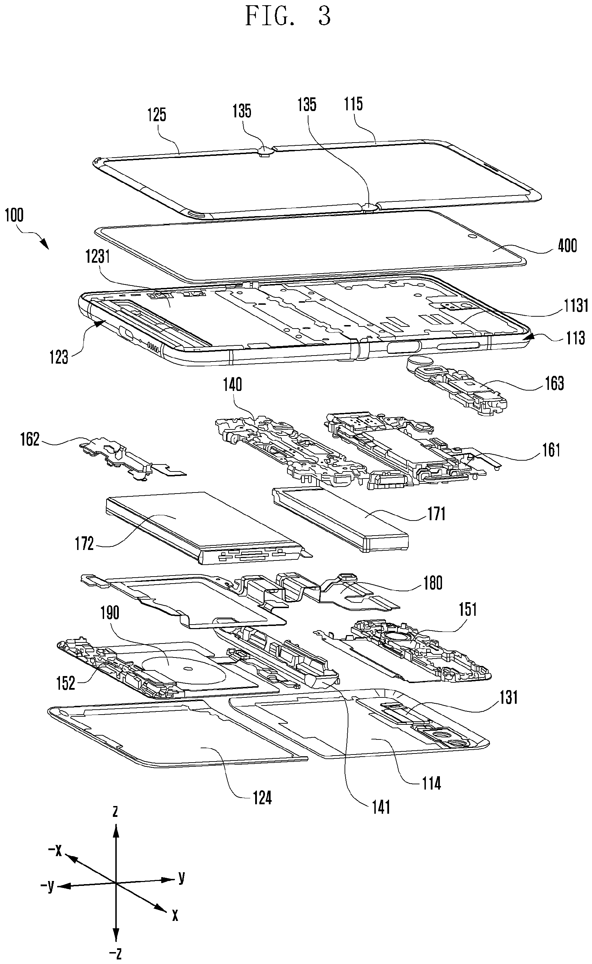

FIG. 3 is an exploded perspective view of the electronic device according to certain embodiments of the disclosure.

With reference to FIG. 3, the electronic device 100 may include a first side member 113 (e.g., first side frame), a second side member 123 (e.g., second side frame), and a hinge mechanism 140 (e.g., hinge module) rotatably connecting the first side member 113 and the second side member 123. According to an embodiment, the electronic device 100 may include a first support member 1131 (e.g., first support member) at least partially extending from the first side member 113, and a second support member 1231 at least partially extending from the second side member 123. According to an embodiment, the first support member 1131 may be integrally formed with the first side member 113 or may be structurally coupled to the first side member 113. Similarly, the second support member 1231 may be integrally formed with the second side member 123 or may be structurally coupled to the second side member 123. According to an embodiment, the electronic device 100 may include a flexible display 400 disposed to be supported by the first support member 1131 and the second support member 1231. According to an embodiment, the electronic device 100 may include a first rear cover 114 that is coupled to the first side member 113 and provides a first space between itself and the first support member 1131, and a second rear cover 124 that is coupled to the second side member 123 and provides a second space between itself and the second support member 1231. In certain embodiments, the first side member 113 and the first rear cover 114 may be integrally formed. In certain embodiments, the second side member 123 and the second rear cover 124 may be integrally formed. According to an embodiment, the electronic device 100 may include a first housing 110 (e.g., first housing 110 in FIG. 1A) (e.g., first housing structure) provided through the first side member 113, the first support member 1131, and the first rear cover 114. According to an embodiment, the electronic device 100 may include a second housing (e.g., second housing 120 in FIG. 1A) (e.g., second housing structure) provided through the second side member 123, the second support member 1231, and the second rear cover 124. According to an embodiment, the electronic device 100 may include a sub-display 131 that is disposed to be visible from the outside through at least some region of the first rear cover 114.

According to certain embodiments, the electronic device 100 may include a first substrate assembly 161 (e.g., main printed circuit board), a camera assembly 163, a first battery 171, or a first bracket 151, arranged in the first space between the first side member 113 and the first rear cover 114. According to an embodiment, the camera assembly 163 may include a plurality of camera devices (e.g., camera devices 105 and 108 in FIGS. 1A and 2A), and may be electrically connected to the first substrate assembly 161. According to an embodiment, the first bracket 151 may provide a support structure for supporting the first substrate assembly 161 and/or the camera assembly 163, and improved rigidity. According to an embodiment, the electronic device 100 may include a second board assembly 162 (e.g., sub printed circuit board), an antenna 190 (e.g., coil member), a second battery 172, or a second bracket 152, arranged in the second space between the second side member 123 and the second rear cover 124. According to an embodiment, the electronic device 100 may include a wiring member 180 (e.g., FPCB) extending from the first substrate assembly 161 across the hinge mechanism 140 to a plurality of electronic components arranged between the second side member 123 and the second rear cover 124, to provide electrical connections therebetween. According to an embodiment, the antenna 190 may include a near field communication (NFC) antenna, a wireless charging antenna, and/or a magnetic secure transmission (MST) antenna. The antenna 190 may, for example, perform short-range communication with an external device or wirelessly transmit and receive power utilized for charging.

According to certain embodiments, the electronic device 100 may include a hinge housing 141 (e.g., hinge cover) that supports the hinge mechanism 140 and is disposed so as to be exposed to the outside when the electronic device 100 is in the folded state (e.g., folded state of FIG. 2A) and be invisible from the outside by being retracted into the first space and/or the second space when the electronic device 100 is in the unfolded state (e.g., unfolded state of FIG. 1A).

According to certain embodiments, the electronic device 100 may include a first protection cover 115 coupled along the periphery of the first side member 113. According to an embodiment, the electronic device 100 may include a second protection cover 125 coupled along the periphery of the second side member 123. According to an embodiment, in the flexible display 400, the periphery of a first flat portion (e.g., first flat portion 130a in FIG. 1B) may be protected by the first protection cover 115. According to an embodiment, in the flexible display 400, the periphery of a second flat portion (e.g., second flat portion 130b in FIG. 1B) may be protected by the second protection cover 125. According to an embodiment, the electronic device 100 may include a protection cap 135 that protects the periphery of the third region (e.g., third region 130c in FIG. 1B) of the flexible display 400 corresponding to the hinge mechanism 140.

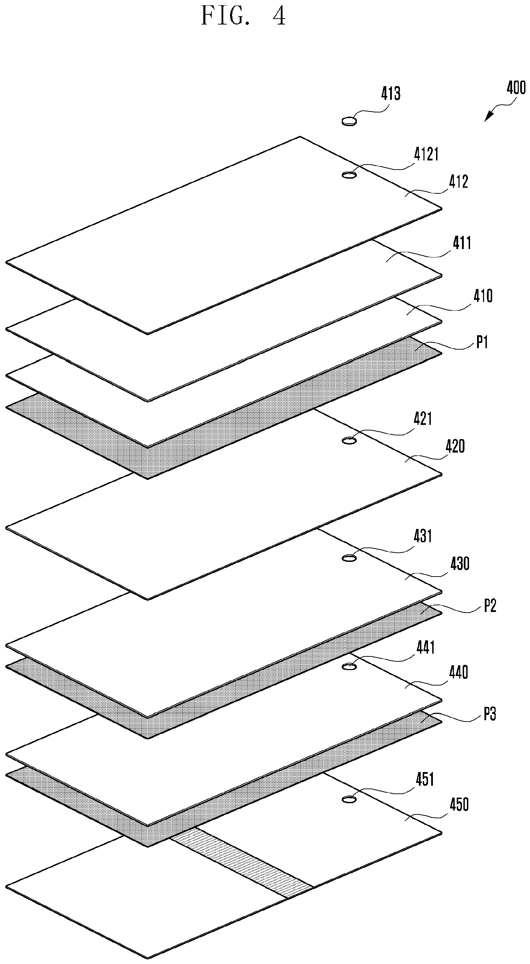

FIG. 4 is an exploded perspective view of a display 400 according to various embodiments of the disclosure.

A display according to exemplary embodiments of the disclosure may include an unbreakable (UB) type OLED display (e.g., curved display). However, the disclosure is not limited thereto, and the display 400 may also include a flat type display of an on-cell touch active matrix organic light-emitting diode (AMOLED) (OCTA) type.

With reference to FIG. 4, a display 400 (e.g., flexible display) may include a window layer 410, a polarizing layer (polarizer (POL)) 420 (e.g., polarizing film) sequentially disposed on a rear surface of the window layer 410, a display panel 430, a sub-material layer 440, and a metal sheet layer 450. According to an embodiment, the window layer 410 may include a glass layer. According to an embodiment, the window layer 410 may include ultrathin glass (UTG). In a certain embodiment, the window layer 410 may also include polymer. In this case, the window layer 410 may include polyethylene terephthalate (PET) or polyimide (PI).

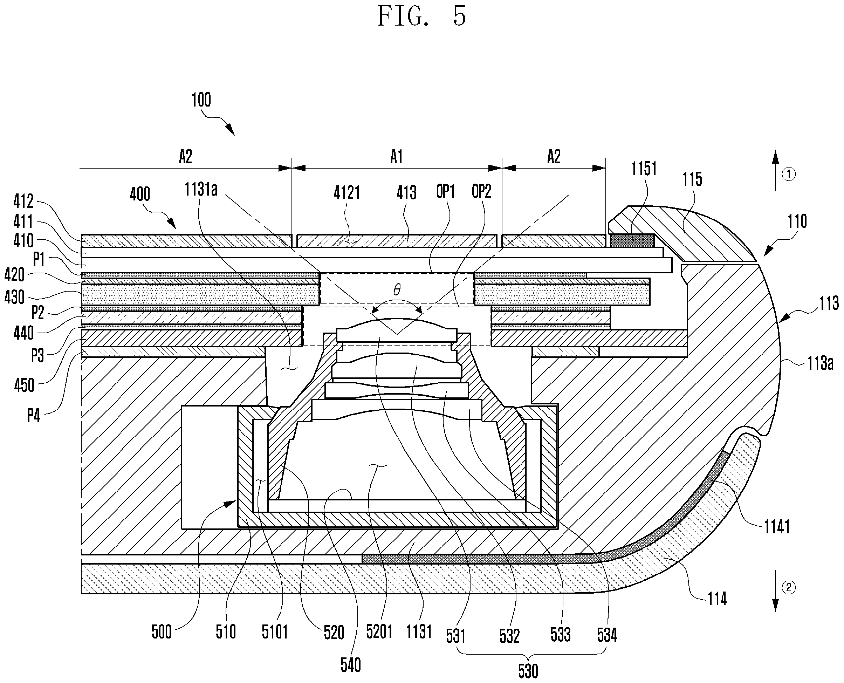

According to various embodiments, the window layer 410, the polarizing layer 420, the display panel 430, the sub-material layer 440, and the metal sheet layer 450 may be disposed to cross at least parts of the first surface (e.g., first surface (e.g., first surface 111 of FIG. 1A) of a first housing (e.g., first housing 110 of FIG. 1A) and a third surface (e.g., third surface 121 of FIG. 1A) of a second housing (e.g., second housing 120 of FIG. 1A). According to an embodiment, the window layer 410, the polarizing layer 420, the display panel 430, the sub-material layer 440, and the metal sheet layer 450 may be attached to one another through adhesives P1, P2, and P3 (or glues). For example, the adhesives P1, P2, and P3 may include at least one of an optical clear adhesive (OCA), a pressure sensitive adhesive (PSA), a thermal adhesive, a general adhesive, or a double-sided tape. According to an embodiment, the display 400 may include another adhesive member (e.g., adhesive member P4 of FIG. 5) (e.g., double-sided tape or waterproof member) disposed at least partly on one surface of the metal sheet layer 450. According to an embodiment, the display 400 may be attached to support plates (e.g., first support plate 1131 and second support plate 1231 of FIG. 3) of the electronic device (e.g., electronic device 100 of FIG. 3) through the other adhesive member (e.g., adhesive member P4 of FIG. 5).

According to various embodiments, the display panel 430 may include a plurality of pixels. According to an embodiment, the polarizing layer 420 may selectively make light, which is generated from a light source of the display panel 430, and which vibrates in a constant direction, pass therethrough. According to an embodiment, the display panel 430 and the polarizing layer 420 may be formed in a body. According to an embodiment, the display 400 may include a touch panel (not illustrated). Although not illustrated, the display panel 430 may include a control circuit. According to an embodiment, the control circuit may include a display driver IC (DDI) and/or a touch display driver IC (TDDI) disposed in a type of chip on panel (COP) or chip on film (COF) type.

According to various embodiments, the sub-material layer 440 may help background revelation when the display is turned off through application of a dark color (e.g., black). According to an embodiment, the sub-material layer 440 may include a buffering member (cushion) formed of polymer so as to prevent damage of the display 400 through absorption of an impact from an outside of the electronic device (e.g., electronic device 100 of FIG. 1A).

According to various embodiments, the metal sheet layer 450 may help stiffness reinforcement of the electronic device (e.g., electronic device 100 of FIG. 1A), may shield an ambient noise, and may be used to dissipate heat emitted from neighboring heat emission components. According to an embodiment, the metal sheet layer 450 may include at least one of steel use stainless (SUS) (e.g., stainless steel (STS), Cu, Al, or CLAD (e.g., laminated member in which SUS and Al are alternately disposed). As another embodiment, the metal sheet layer 450 may include other different alloy materials. According to an embodiment, the metal sheet layer 450 may be integrally formed so that a part facing the first housing (e.g., first housing 110 of FIG. 1A) of the electronic device (e.g., electronic device 100 of FIG. 1A) and a part facing the second housing (e.g., second housing 120 of FIG. 1A) are connected to a bendable part formed on a part facing the hinge module (e.g., hinge module 140 of FIG. 3). As another embodiment, on the metal sheet layer 450, the part facing the first housing (e.g., first housing 110 of FIG. 1A) and the part facing the second housing (e.g., second housing 120 of FIG. 1A) may be separately formed excluding the part facing the hinge module (e.g., hinge module 140 of FIG. 3). In a certain embodiment, the flexible display 400 may further include reinforcement plates (not illustrated) of a metal material disposed under the metal sheet layer 450 for the stiffness reinforcement. According to an embodiment, the reinforcement plates may be disposed to face the first housing (e.g., first housing 110 of FIG. 1A) and the second housing (e.g., second housing 120 of FIG. 1A), respectively.

According to various embodiments, the display 400 may include at least one functional member disposed between the sub-material layer 440 and the metal sheet layer 450. According to an embodiment, the functional member may include a graphite sheet for heat dissipation, an added display, a force touch FPCB, a fingerprint sensor FPCB, an antenna radiator for communication, a heat dissipation sheet, a conductive/nonconductive tape, or an open cell sponge. According to an embodiment, if bending is not possible, the functional member may be individually disposed in the first housing (e.g., first housing 110 of FIG. 1A) and the second housing (e.g., second housing 120 of FIG. 1A). According to an embodiment, if the bending is possible, the functional member may be disposed from the first housing (e.g., first housing 110 of FIG. 1A) up to at least a part of the second housing (e.g., second housing 120 of FIG. 1A) through the hinge module (e.g., hinge module 140 of FIG. 3). As another embodiment, the display 400 may further include a detection member for detecting an input by an electromagnetic induction type handwriting member. According to an embodiment, the detection member may include a digitizer.

According to various embodiments, the electronic device (e.g., electronic device 100 of FIG. 1A) may include a camera device (e.g., camera device 105 of FIG. 1A) disposed under the display 400 to detect an external environment through the display 400. In a certain embodiment, the electronic device (e.g., electronic device 100 of FIG. 1A) may also include at least one sensor module (e.g., sensor module 104 of FIG. 1A) (e.g., illuminance sensor, proximity sensor, or TOF sensor) disposed under the display 400. According to an embodiment, the polarizing layer 420, the display panel 430, the sub-material layer 440, and the metal sheet layer 450 may include through-holes 421, 431, 441, and 451 formed in the corresponding positions to detect the external environment through the camera device (e.g., camera device 105 of FIG. 1A) disposed thereunder. According to an embodiment, the through-holes 421, 431, 441, and 451 may be formed with sizes substantially overlapping at least a viewing angle (e.g., viewing angle θ of FIG. 5) of the camera device (e.g., camera device 105 of FIG. 1A). According to an embodiment, the size of the through-holes 421, 431, 441, and 451 may be formed based on at least the size of the camera device (e.g., camera device 105 of FIG. 1A), and the viewing angle (e.g., viewing angle θ of FIG. 5) of the camera device 105, and the sizes of the respective through-holes 421, 431, 441, and 451 may be different from one another.

According to various embodiments, the display 400 may include a first protection layer 411 and a second protection layer 412 sequentially laminated on the window layer 410. According to an embodiment, the first protection layer 411 may be formed of a first material. According to an embodiment, the second protection layer 412 may be formed of a second material that is different from the first material. According to an embodiment, the first material may include polyethylene terephthalate (PET) or polyimide (PI) having relatively excellent optical characteristics against the second material. According to an embodiment, the second material may include thermoplastic polyurethane (TPU) that is relatively advantageous in terms of elasticity against the first material. According to an embodiment, the second protection layer 412 may include a through-hole 4121 formed in a position corresponding to the above-described through-holes 421, 431, 441, and 451 facing the camera device (e.g., camera device 105 of FIG. 1A), and a peeling part 413 disposed on at least a part of the through-hole 4121. According to an embodiment, the through-hole 4121 and/or the peeling part 413 may be formed with sizes substantially overlapping at least the viewing angle (e.g., viewing angle θ of FIG. 5) of the camera device (e.g., camera device 105 of FIG. 1A). According to an embodiment, the peeling part 413 may be attached to the through-hole 4121 through an adhesive so as to be separable from the second protection layer 412. For example, since the peeling part 413 has a smaller adhesive area than the adhesive area of the neighboring second protection layer 412, it may be attached through an adhesive having relatively higher adhesive force than that of the surroundings. According to an embodiment, the peeling part 413 may be formed of substantially the same material (e.g., PET) as that of the first protection layer 411. In a certain embodiment, the peeling part 413 may be formed of a third material that is different from those of the first protection layer 411 and the second protection layer 412.

According to various embodiments, the peeling part 413 may be attached onto the first protection layer 411 through the through-hole 4121 of the second protection layer 412. According to various embodiments, since the peeling part 413 is attached onto the first protection layer 411, stiffness of the area corresponding to the camera device (e.g., camera device 105 of FIG. 1A) can be reinforced. According to an embodiment, if the peeling part 413 is polluted through an external pollutant such as scratch, and the performance of the camera device (e.g., camera device 105 of FIG. 1A) is degraded, the peeling part 413 included in the second protection layer 412 may be removed, and a new peeling part 413 may be attached to the first protection layer 411 through the through-hole 4121 of the second protection layer 412, so that it is not necessary to replace the whole of the second protection layer 412 to help the cost saving.

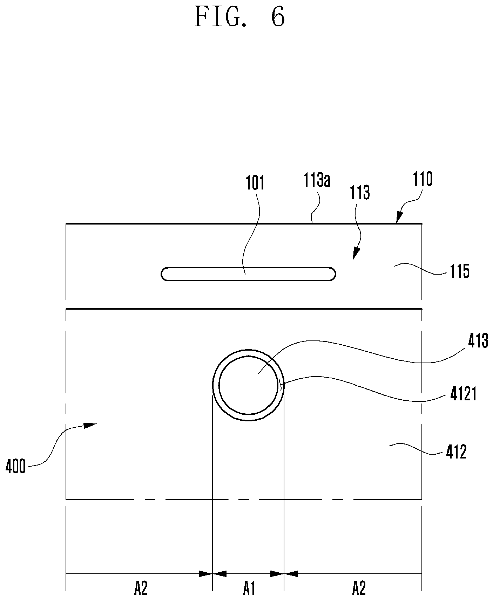

FIG. 5 is a cross-sectional view of an electronic device 100 as viewed along line 5-5 of FIG. 1A according to various embodiments of the disclosure. FIG. 6 is a partial configuration diagram of a display 400 including a peeling part 413 according to various embodiments of the disclosure. Since at least one of constituent elements of the electronic device 100 according to an embodiment is the same as or is similar to at least one of constituent elements of the electronic device 100 of FIGS. 1A to 3 and the display 400 of FIG. 4, the duplicate explanation thereof will be omitted.

In illustrating FIG. 5, for convenience in explanation, a sound output device 101 and a sensor module 104 have been omitted.

With reference to FIGS. 5 and 6, the electronic device 100 may include a first housing 110 and a second housing (e.g., second housing 120 of FIG. 1A) connected to each other through a hinge module (e.g., hinge module 140 of FIG. 3) and rotatably disposed against each other. According to an embodiment, the electronic device 100 may include a display 400 (e.g., flexible display) disposed to be directed in a first direction (direction ①) through the first housing 110. According to an embodiment, the display 400 may be disposed to be supported by a first support plate 1131 formed on a first side frame 113 of the first housing 110. According to an embodiment, the electronic device may include a first rear cover 114 disposed on the first support plate 1131, and directed in a second direction (direction (2)) facing the first direction. According to an embodiment, the electronic device 100 may implement a waterproof function through a waterproof member 1141 (e.g., waterproof tape) disposed between the first rear cover 114 and the first support plate 1131.

According to various embodiments, the electronic device may include a camera device 500 (e.g., camera device 105 of FIG. 1A) disposed on the first housing 110. According to an embodiment, the camera device 500 may include a camera housing 510, a lens housing 520 disposed in an inner space 5101 of the camera housing 510, and projecting at least partly in a display direction (e.g., direction CD), a plurality of lenses 530: 531, 532, 533, and 534 disposed at predetermined intervals in an inner space 5202 of the lens housing 520, and at least one image sensor 540 disposed to obtain at least a part of light (not illustrated) having passed through the plurality of lenses 530 in the inner space 5101 of the camera housing 510. According to an embodiment, the camera device 500 may be disposed to face the display panel 430 through an accommodation space 1131a provided through a structural change of the first support plate 1131. According to an embodiment, in case that the camera device 500 includes an auto focus (AF) function, the lens housing 520 may move so that distances between the plurality of lenses 530 and the display panel 430 are varied through a specific driving unit (not illustrated) in the camera housing 510. According to an embodiment, the camera device 500 may include a separate driving unit disposed to change the position of at least one of the plurality of lenses 530 to perform an AF function. In a certain embodiment of the camera device 500, the camera housing 510 may be omitted, and the lens housing 520 may be directly disposed on the first support plate 1131 through a specific alignment process. According to an embodiment, in case that the camera device 500 is directly disposed on the first support plate 1131, the camera housing 510 may be omitted to reduce a camera disposition space, and the lens housing 520 may be disposed to be attached to one side surface of the first support plate 1131.

According to various embodiments, the display 400 may include a polarizing layer 420 sequentially disposed through adhesives P1, P2, and P3 under the window layer 410 to be substantially aligned with the camera device 500, a display panel 430, a sub-material layer 440, and a metal sheet layer 450. According to an embodiment, the display 400 may be attached to the first support plate 1131 of the electronic device 100 through an adhesive member P4 (e.g., double-sided tape or waterproof member) disposed at least partly on one surface of the metal sheet layer 450. According to an embodiment, the display panel 430 including the polarizing layer 420 may be aligned with the camera device 500, and may include a first opening OP1 (e.g., through-holes 421 and 431 of FIG. 4) formed with a size substantially overlapping at least a viewing angle θ of the camera device 500. According to an embodiment, the sub-material layer 440 and the metal sheet layer 450 may be disposed to be aligned with the camera device 500, and may include a second opening OP2 (e.g., through-holes 441 and 451 of FIG. 4) formed to have the same center as the center of the first opening OP1. According to an embodiment, as viewed above the display 400, at least the second opening OP2 may be formed to be larger than the first opening OP1. According to an embodiment, the second opening OP2 may be formed with a size enough to accommodate at least a part (e.g., lens housing 520) of the camera device 500.

According to various embodiments, the display 400 may include a first protection layer 411 and a second protection layer 412 sequentially disposed on an upper part of the window layer 410. According to an embodiment, the first protection layer 411 may include a peelable area A1 and a neighboring area A2 for accommodating the peeling part 413 through the through-hole 4121. According to an embodiment, the peelable area A1 may have substantially the same size as the size of the peeling part 413. According to an embodiment, the peelable area A1 may be formed with a size substantially overlapping the viewing angle θ of the camera device 500. According to an embodiment, the peeling part 4130 may be accommodated in the through-hole 4121 of the second protection layer 412, and may be attached to the first protection layer 411 exposed from the through-hole 4121 through an adhesive. For example, if the peeling part 413 is polluted through an external pollutant such as scratch, the existing peeling part 413 may be removed, and a new peeling part having substantially the same size as the size of the existing peeling part 413 may be attached to the first protection layer 411 through the through-hole 4121.

According to various embodiments, the electronic device 100 may include a first protection cover 115 disposed along an edge of the first side frame 113. According to an embodiment, the display 400 can be protected since the edge thereof is interposed between the first protection cover 115 and the first side frame 113. For example, since the first protection layer 411 is interposed between the first protection cover 115 and the first side frame 113, the display 400 may be disposed so that the edge of the first protection layer 411 can be protected. According to an embodiment, the electronic device 100 may further include a sealing member 1151 interposed between the first protection layer 411 and the first protection cover 115 to prevent an inflow of external foreign substances. In a certain embodiment, the second protection layer 412 may be disposed between the first protection cover 115 and the first side frame 113 so that the edge of the second protection layer 412 can be protected.

Although the display 400 including the peeling part 413 according to exemplary embodiments of the disclosure has been applied to the folder type electronic device 100, it may also be applied to a general bar type electronic device.

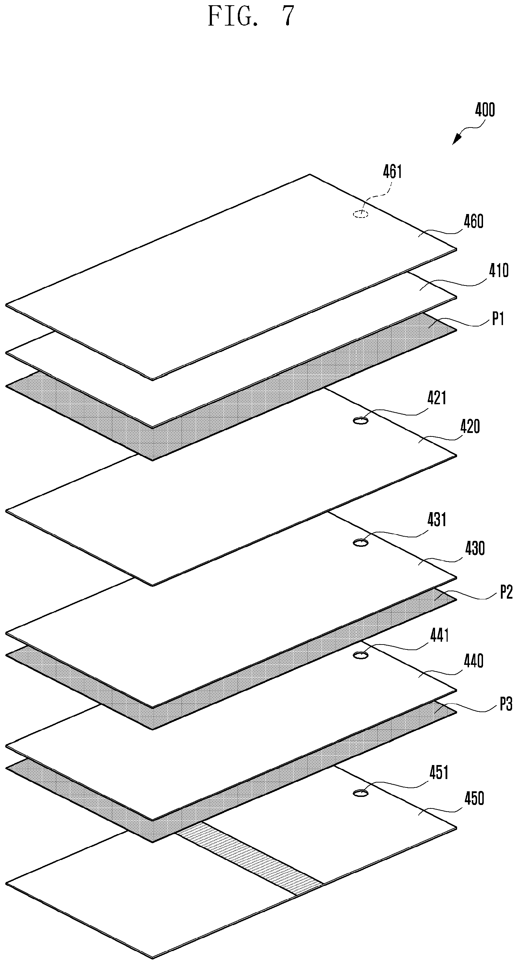

FIG. 7 is an exploded perspective view of a display 400 according to various embodiments of the disclosure.

In explaining the display 400 of FIG. 7, the same reference numerals are given to the same constituent elements of the display 400 of FIG. 4, and the detailed explanation thereof may be omitted.

With reference to FIG. 7, the display 400 may include a protection layer 460 disposed on an upper part of a window layer 410. In this case, the display 400 may be disposed in a position substantially corresponding to through-holes 421, 431, 441, and 451 disposed under a display panel 430, and may include a peeling part 461 being peelable from a neighboring area A2. In this case, the peeling part 461 may be formed of the same material (e.g., PET or PI) as that of the protection layer 460.

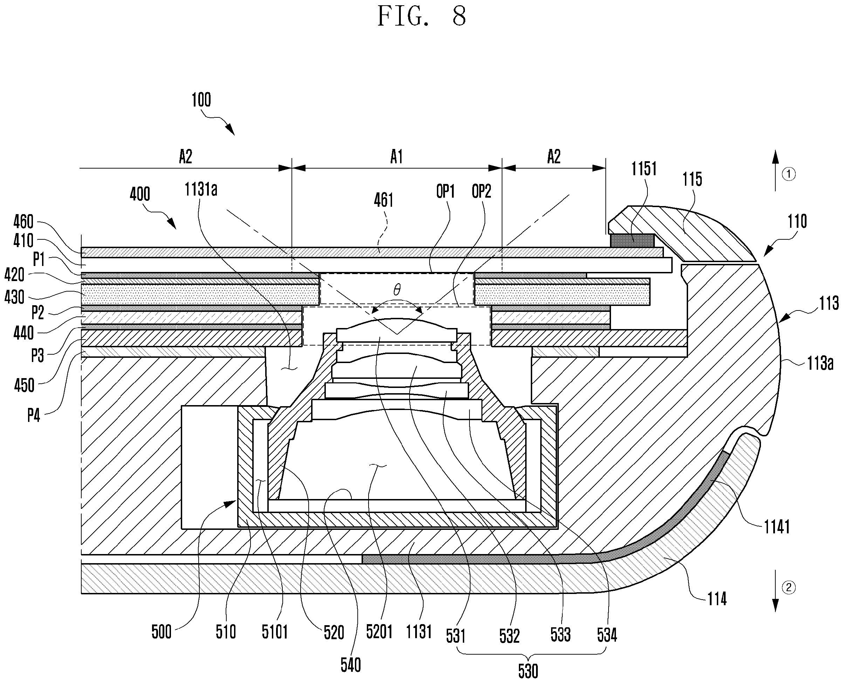

FIG. 8 is a cross-sectional view of an electronic device 100 as viewed along line 8-8 of FIG. 1A according to various embodiments of the disclosure.

In explaining the electronic device 100 of FIG. 8, the same reference numerals are given to the same constituent elements of the electronic device 100 of FIG. 5, and the detailed explanation thereof may be omitted.

In illustrating FIG. 8, for convenience in explanation, a sound output device 101 and a sensor module 104 have been omitted.

With reference to FIG. 8, the electronic device 100 may include a first housing 110 and a second housing (e.g., second housing 120 of FIG. 1A) connected to each other through a hinge module (e.g., hinge module 140 of FIG. 3) and rotatably disposed against each other. According to an embodiment, the electronic device 100 may include a display 400 (e.g., flexible display) disposed to be directed in a first direction (direction ①) through the first housing 110. According to an embodiment, the display 400 may be disposed to be supported by a first support plate 1131 formed on a first side frame 113 of the first housing 110. According to an embodiment, the electronic device may include a first rear cover 114 disposed on the first support plate 1131, and directed in a second direction (direction (2)) facing the first direction. According to an embodiment, the electronic device 100 may implement a waterproof function through a waterproof member 1141 (e.g., waterproof tape) disposed between the first rear cover 114 and the first support plate 1131.

According to various embodiments, the electronic device 100 may include a protection layer 460 disposed on an upper part of the window layer 410 (e.g., in the first direction (direction CD). According to an embodiment, the protection layer 460 may include a peeling part 461 being peelable from the protection layer 460.

According to various embodiments, the peeling part 461 may be disposed from a peelable area A1 to a neighboring area A2 of the protection layer 460 in peelable manner. For example, the peeling part 461 may be disposed to be connected at least partly to the neighboring area A2 of the protection layer 460. According to an embodiment, the peeling part 461 may be formed in a body with the protection layer 460, but may be disposed to be easily peeled off, so that the stiffness of the area corresponding to the camera device 500 (e.g., camera device 105 of FIG. 1A) can be reinforced. According to an embodiment, in case that the peeling part 461 is polluted through the external pollutant, such as scratch, and the performance of the camera device 500 is degraded, the currently disposed peeling part 461 may be removed, and a new peeling part 461 may be disposed on the area from which the existing peeling part 461 has been removed as a substitute, so that it is not necessary to replace the whole of the second protection layer 460 to help the cost saving. According to an embodiment, the protection layer 460 may be disposed to be interposed between the first protection cover 115 and the first side frame 113, and thus the edge of the protection layer 460 can be protected.

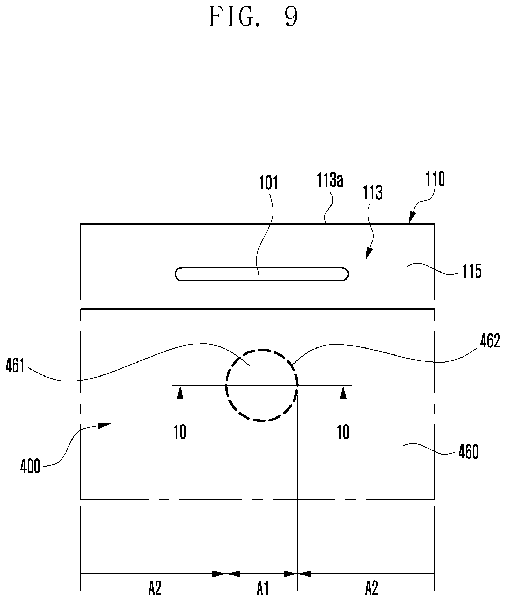

FIG. 9 is a partial configuration diagram of a display 400 including a peeling part 461 according to various embodiments of the disclosure. Since at least one of constituent elements of the first housing 110 according to an embodiment is the same as or is similar to at least one of constituent elements of the electronic device 100 of FIGS. 1A to 3 and the display 400 of FIG. 7, the duplicate explanation thereof will be omitted.

With reference to FIG. 9, the display 400 may include a protection layer 460 laminated on a window layer (e.g., window layer 410 of FIG. 8). According to an embodiment, the protection layer 460 may include a peeling part 461 disposed with a size overlapping at least a viewing angle (e.g., viewing angle θ of FIG. 8) of the camera device (e.g., camera device 500 of FIG. 8) in an area corresponding to the camera device (e.g., camera device 500). According to an embodiment, the protection layer 460 may include a peelable area A1 corresponding to the peeling part 461 and a neighboring area A2 being separated from the peelable area A1 by using a separation part 462. For example, the separation part 462 may be disposed on a boundary part of the neighboring area A2. For example, in order to prevent the performance degrading of the camera device (e.g., camera device 500 of FIG. 8), the polluted peeling part 461 may be peeled off from the neighboring area A2 of the protection layer 460 through the separation part 462.

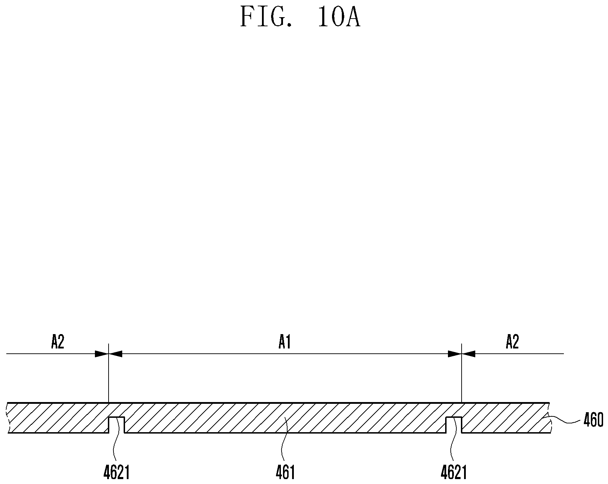

FIGS. 10A to 10C are partial cross-sectional views of the protection layer 460 as viewed along line 10-10 of FIG. 9 according to various embodiments of the disclosure.

With reference to FIG. 10A, a separation part 462 may be disposed on a boundary part of a peelable area A1 and a neighboring area A2 determining a peeling part 461. According to an embodiment, the separation part 462 may include a first separation groove 4621 formed relatively lower than a rear surface of the protection layer 460 (e.g., surface coming in contact with a window layer 410 of FIG. 8) on the rear surface.

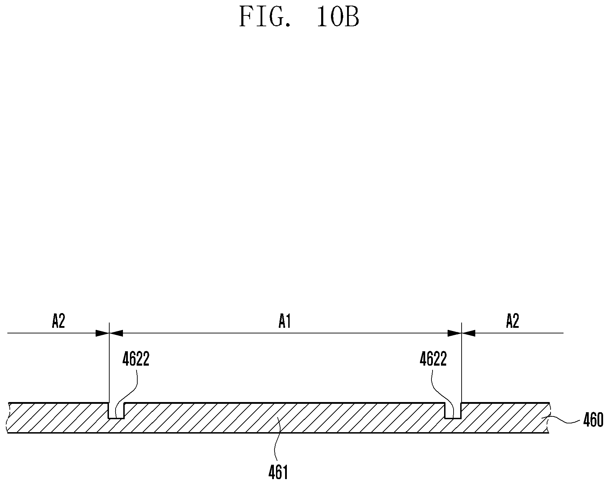

With reference to FIG. 10B, the separation part 462 may be disposed on the boundary part of the peelable area A1 and the neighboring area A2 determining the peeling part 461. According to an embodiment, the separation part 462 may include a second separation groove 4622 formed relatively lower than an upper surface of the protection layer 460 (e.g., surface facing the rear surface of the protection layer 460) on the upper surface.

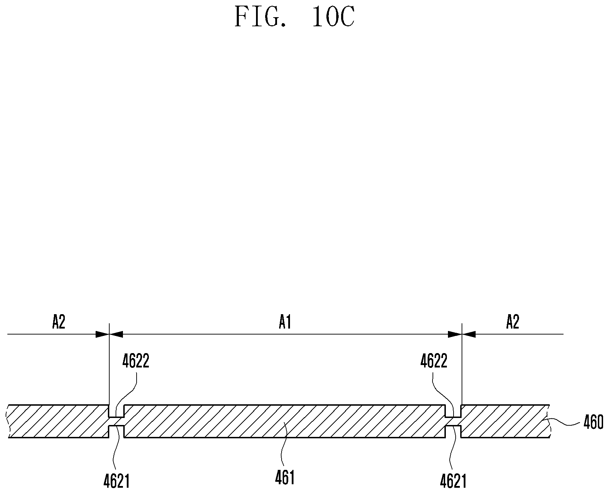

With reference to FIG. 10C, the separation part 462 may be disposed on the boundary part of the peelable area A1 and the neighboring area A2 determining the peeling part 461. According to an embodiment, the separation part 462 may include the first separation groove 4621 and the second separation groove 4622 formed relatively lower than the upper surface and the rear surface of the protection layer 460 on the rear surface and the upper surface. For example, such separation grooves 4621 and 4622 may include sheath marks or punching marks through a tool, being formed on the boundary part of the peelable area A1 and the neighboring area A2 of the protection layer 460. In a certain embodiment, the peeling part 460 disposed in the peelable area A1 may be formed with a thickness that is smaller than that of the neighboring area A2.

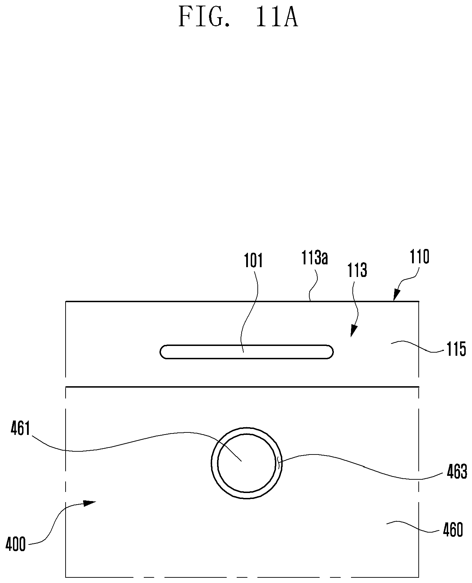

FIGS. 11A to 11D are partial configuration diagrams of a display 400 including a peeling part 461 with a size corresponding to a viewing angle according to various embodiments of the disclosure. Since at least one of constituent elements of the first housing 110 according to an embodiment is the same as or is similar to at least one of constituent elements of the electronic device 100 of FIGS. 1A to 3 and the display 400 of FIG. 7, the duplicate explanation thereof will be omitted.

With reference to FIG. 11A, the display 400 may include the peeling part 461 disposed to be peelable from the protection layer 460. According to an embodiment, the peeling part 461 may be disposed through a separation space 463 (e.g., through-hole) separated from the protection layer 460 at designated intervals. For example, since the peeling part 461 may be disposed as a separate constituent element through the separation space 463 completely separated from the protection layer 460, it may be formed of a material that is different from the material of the protection layer 460.

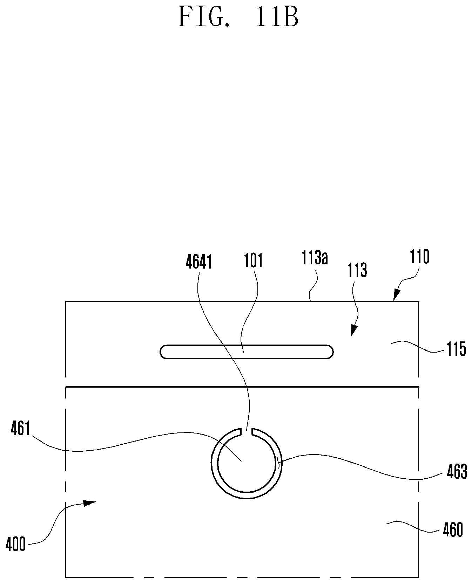

With reference to FIG. 11B, the peeling part 461 may be disposed through a first connection part 4641 connected to the protection layer 460 in the separation space 463. In this case, the protection layer 460 and the peeling part 461 may be formed of the same material.

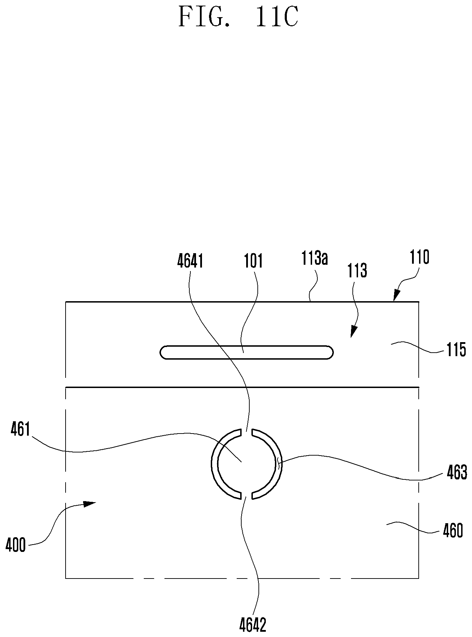

With reference to FIG. 11C, the peeling part 461 may be disposed through a first connection part 4641 and a second connection part 4642 connected to the protection layer 460 in the separation space 463. According to an embodiment, the first connection part 4641 and the second connection part 4642 may be disposed in positions facing each other in the separation space 463.

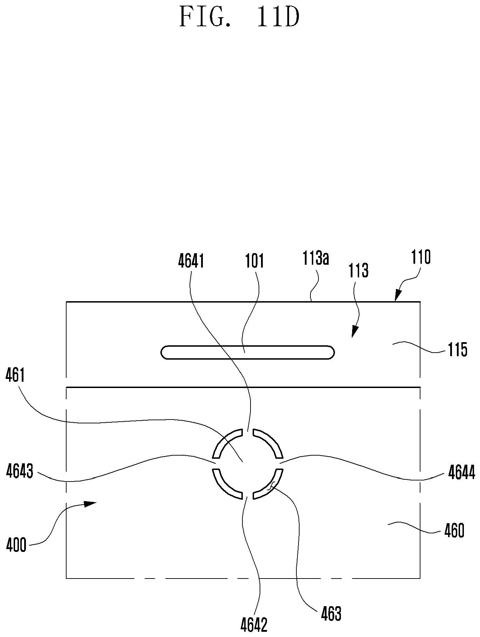

With reference to FIG. 11D, the peeling part 461 may be disposed through a first connection part 4641, a second connection part 4642, a third connection part 4643, and a fourth connection part 4644 connected to the protection layer 460 in the separation space 463. According to an embodiment, the first connection part 4641, the second connection part 4642, the third connection part 4643, and the fourth connection part 4644 may be disposed at equal intervals. In a certain embodiment, the peeling part 461 may be disposed through five or more connection parts formed to be the same or not in the separation space 463.

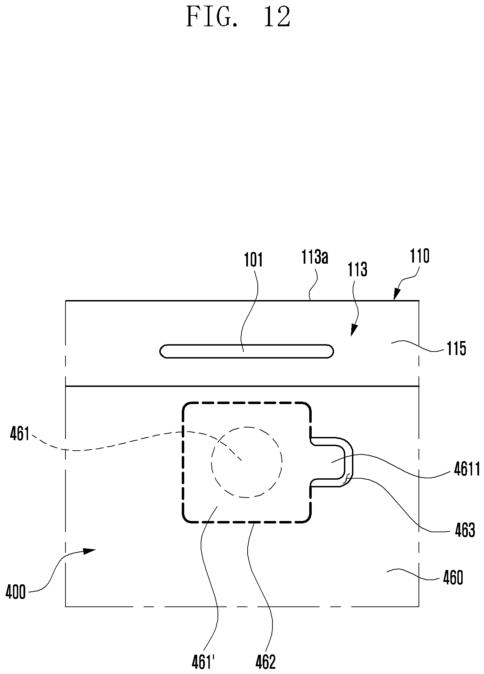

FIG. 12 is a partial configuration diagram of a display 400 including a peeling part 461' with a size that is larger than a viewing angle according to various embodiments of the disclosure. Since at least one of constituent elements of the first housing 110 according to an embodiment is the same as or is similar to at least one of constituent elements of the electronic device 100 of FIGS. 1A to 3 and the display 400 of FIG. 7, the duplicate explanation thereof will be omitted.

With reference to FIG. 12, the display 400 may include a peeling part 461' disposed to be peelable from the protection layer 460. According to an embodiment, since the peeling part 461' is formed with a larger size than the size of the existing peeling part 461 formed with substantially the same size as the viewing angle (e.g., viewing angle θ of FIG. 8) of the camera device (e.g., camera device 500 of FIG. 8), easy peeling can be induced. According to an embodiment, the protection layer 460 may include a peeling part 461', a separation part 462 (e.g., sheath marks or punching marks) disposed between the peeling part 461' and the neighboring area A2 of the protection layer 460, and a separation space 463. In this case, the peeling part 461' may include a handle part 4611, and the handle part 4611 may be disposed through the separation space 463 for easy peeling.

According to various embodiments, an electronic device (e.g., electronic device 100 of FIG. 5) may include: a housing (e.g., first housing 110 of FIG. 5); a flexible display (e.g., flexible display 400 of FIG. 5) disposed to be able to be seen from an outside through at least a part of the housing, the flexible display including a display panel (e.g., display panel 430 of FIG. 5) including a first opening (e.g., first opening OP1 of FIG. 5), a window layer (e.g., window layer 410 of FIG. 5) laminated on an upper surface of the display panel, a first protection layer (e.g., first protection layer 411 of FIG. 5) composed of a first material laminated on an upper surface of the window layer, and a second protection layer (e.g., first protection layer 412 of FIG. 5) composed of a second material laminated on an upper surface of the first protection layer; and a camera device (e.g., camera device 500 of FIG. 5) disposed to be substantially aligned with a first opening, wherein when the flexible display is viewed from the outside, the second protection layer includes a peeling part (e.g., peeling part 413 of FIG. 5) configured to overlap at least a viewing angle (e.g., viewing angle θ of FIG. 5) of the camera device and disposed to be separable from the second protection layer.

According to various embodiments, the first material may include polyethylene terephthalate (PET) or polyimide (PI).

According to various embodiments, the second material may include thermoplastic polyurethane (TPU).

According to various embodiments, the first protection layer may be disposed so that an edge of the first protection layer is not seen from the outside through the housing.

According to various embodiments, the first protection layer and the second protection layer may be disposed so that edges of the first protection layer and the second protection layer are not seen from the outside through the housing.

According to various embodiments, the peeling part may be disposed on at least a part of a through-hole formed on the second protection layer, overlapping at least the viewing angle of the camera device.

According to various embodiments, the peeling part may be formed of the first material.

According to various embodiments, the window layer may be formed of glass or polymer.

According to various embodiments, the flexible display may further include at least one sub-material layer laminated on a rear surface of the display panel, and the sub-material layer may include a second opening formed to accommodate at least a part of the camera device in an area corresponding to the first opening.

According to various embodiments, an electronic device (e.g., electronic device 100 of FIG. 8) may include: a housing (e.g., first housing 110 of FIG. 8); a flexible display (e.g., flexible display 400 of FIG. 8) disposed to be able to be seen from an outside through at least a part of the housing, the flexible display including a display panel (e.g., display panel 430 of FIG. 8) including a first opening (first opening OP1 of FIG. 8), a window layer (e.g., window layer 410 of FIG. 8) laminated on an upper surface of the display panel, and a protection layer (e.g., protection layer 460 of FIG. 8) laminated on an upper surface of the window layer; and a camera device (e.g., camera device 500 of FIG. 8) disposed to be substantially aligned with a first opening, wherein when the flexible display is viewed from the outside, the protection layer includes a peeling part (e.g., peeling part 461 of FIG. 8) configured to overlap at least a viewing angle (e.g., viewing angle θ of FIG. 8) of the camera device and disposed to be separable from the protection layer.

According to various embodiments, the peeling part and the protection layer may be composed of the same material.

According to various embodiments, the peeling part may be disposed to be separable through a separation part formed on a boundary part of a neighboring area of the protection layer.

According to various embodiments, the separation part may include at least one separation groove formed lower than the neighboring area from an upper surface and/or a rear surface of the protection layer.

According to various embodiments, the separation part may include a sheath area or a punching area dividing the peeling part and the neighboring area from each other.

According to various embodiments, the peeling part may be disposed through a separation space separating the peeling part from the neighboring area at designated intervals.

According to various embodiments, the electronic device may include at least one connection part disposed to connect the neighboring area and the peeling part to each other in the separation space.

According to various embodiments, the protection layer may be disposed so that an edge of the protection layer is not seen from the outside through the housing.

According to various embodiments, the flexible display may further include at least one sub-material layer laminated on a rear surface of the display panel, and the sub-material layer may include a second opening formed to accommodate at least a part of the camera device in an area corresponding to the first opening.

According to various embodiments, an electronic device (e.g., electronic device 100 of FIG. 1A) may include: a hinge module (e.g., hinge module 140 of FIG. 3); a foldable housing connected at least partly to the hinge module, and including a first housing (e.g., first housing 110 of FIG. 1A) including a first surface (e.g., first surface 111 of FIG. 1A) directed in a first direction, a second surface (e.g., second surface 112 of FIG. 2B) directed in a second direction facing the first surface, and a first side frame (e.g., side frame 113 of FIG. 1A) surrounding a first space between the first surface and the second surface in an unfolded state, and a second housing (e.g., second housing 120 of FIG. 1A) including a third surface (e.g., third surface 121 of FIG. 1A) directed in the first direction, a fourth surface (e.g., fourth surface 122 of FIG. 2B) directed in the second direction, and a second side frame (e.g., second side frame 123 of FIG. 1A) surrounding a second space between the third surface and the fourth surface in the unfolded state, so that the foldable housing operates to make the first surface and the third surface face each other in a folded state; a flexible display (e.g., flexible display of FIG. 1A) disposed from the first surface to at least a part of the third surface to be able to be seen from an outside in the first direction, and including a display panel (e.g., display panel 430 of FIG. 8) including a first opening (e.g., first opening OP1 of FIG. 8), a window layer (e.g., window layer 410 of FIG. 8) laminated on an upper surface of the display panel, and a protection layer (e.g., protection layer 460 of FIG. 8) laminated on an upper surface of the window layer; and a camera device (e.g., camera device 500 of FIG. 8) disposed to be aligned with the first opening, wherein when the flexible display is viewed in the first direction, the protection layer includes a peeling part (e.g., peeling part 461 of FIG. 8) configured to overlap at least a viewing angle (e.g., viewing angle θ of FIG. 8) of the camera device and disposed to be separable from the protection layer.

According to various embodiments, the electronic device may further include a protection cover (e.g., first protection cover 115 of FIG. 8) disposed along an edge of the first side frame, and an edge of the protection layer may be disposed at least partly between the first side frame and the protection cover.

## Claims

1. An electronic device (100) comprising:
a housing (110, 120);
a flexible display (400) disposed to be viewable from an outside of the electronic device (100) through at least a part of the housing (110, 120), the flexible display (400) including:
a display panel (430) including a first opening (431, OP1);
a window layer (410) laminated on a surface of the display panel (430) facing the outside of the electronic device (100); and
a protection layer (412, 460) laminated on a surface of the window layer (410) facing the outside of the electronic device (100); and
a camera device (500) disposed to be substantially aligned with the first opening (431, OP1),
**characterized in that**
when the flexible display (400) is viewed from the outside, the protection layer (412, 460) includes a peeling part (413, 461) configured to overlap at least a viewing angle of the camera device (500) and disposed to be separable from the protection layer (412, 460).

2. The electronic device (100) of claim 1, wherein the peeling part (413, 461) and the protection layer (412) are composed of the same material.

3. The electronic device (100) of any of claims 1 or 2, wherein the peeling part (413, 461) is disposed to be separable through a separation part formed on a boundary part of a neighboring area of the protection layer (412, 460).

4. The electronic device (100) of claim 3, wherein the separation part comprises at least one separation groove formed lower than the neighboring area from a surface of the protection layer (412, 460) facing the outside of the electronic device (100) and/or a surface of the protection layer (412, 460) facing the inside of the electronic device (100).

5. The electronic device (100) of claim 3, wherein the separation part comprises a sheath area or a punching area dividing the peeling part (413, 461) and the neighboring area from each other.

6. The electronic device (100) of any of claims 1 to 5, wherein the peeling part (413) is disposed through a separation space separating the peeling part (413, 461) from the neighboring area at designated intervals.

7. The electronic device (100) of any of claims 1 to 6, further comprising an intermediate protection layer (411), composed of a first material, being laminated between the surface of the window layer (410) facing the outside of the electronic device (100) and the surface of the protection layer (412) facing the inside of the electronic device (100).

8. The electronic device (100) of claim 7, wherein the first material comprises polyethylene terephthalate, PET, or polyimide, PI.

9. The electronic device (100) of claim 7 or 8, wherein the protection layer (412) is composed of a second material comprising thermoplastic polyurethane, TPU.

10. The electronic device (100) of any of claims 7 to 9, wherein the intermediate protection layer (411) is disposed so that an edge of the intermediate protection layer (411) is not seen from the outside through the housing (110, 120).

11. The electronic device (100) of any of claims 7 to 9, wherein the intermediate protection layer (411) and the protection layer (412) are disposed so that edges of the intermediate protection layer (411) and the protection layer (412) are not seen from the outside through the housing (110, 120).

12. The electronic device (100) of claim 7, wherein the peeling part (413) is disposed on at least a part of a through-hole formed on the protection layer (412), overlapping at least the viewing angle of the camera device.

13. The electronic device (100) of any of claims 7 to 13, wherein the peeling part (413) is formed of the first material.

14. The electronic device (100) of any of claims 1 to 13, wherein the window layer (410) is formed of glass or polymer.

15. The electronic device (100) of any of claims 1 to 14, wherein the flexible display (400) further comprises at least one sub-material layer (440) laminated on a rear surface of the display panel (430), and
the sub-material layer (440) includes a second opening (441) formed to accommodate at least a part of the camera device (500) in an area corresponding to the first opening (431).

## Patentansprüche

1. Elektronische Vorrichtung (100), die Folgendes umfasst:
ein Gehäuse (110, 120);
eine flexible Anzeige (400), die so angeordnet ist, dass sie von außerhalb der elektronischen Vorrichtung (100) durch mindestens einen Teil des Gehäuses (110, 120) sichtbar ist, wobei die flexible Anzeige (400) Folgendes umfasst:
eine Anzeigetafel (430) mit einer ersten Öffnung (431, OP1);
eine Fensterschicht (410), die auf eine Oberfläche der Anzeigetafel (430) laminiert ist, die der Außenseite der elektronischen Vorrichtung (100) zugewandt ist; und
eine Schutzschicht (412, 460), die auf eine der Außenseite der elektronischen Vorrichtung (100) zugewandte Oberfläche der Fensterschicht (410) laminiert ist; und
eine Kameravorrichtung (500), die so angeordnet ist, dass sie im Wesentlichen mit der ersten Öffnung (431, OP1) fluchtet,
**dadurch gekennzeichnet, dass**
wenn die flexible Anzeige (400) von außen betrachtet wird, die Schutzschicht (412, 460) einen Ablöseteil (413, 461) enthält, der so konfiguriert ist, dass er mindestens einen Betrachtungswinkel der Kameravorrichtung (500) überlappt und so angeordnet ist, dass er von der Schutzschicht (412, 460) getrennt werden kann.

2. Elektronische Vorrichtung (100) nach Anspruch 1, wobei der Ablöseteil (413, 461) und die Schutzschicht (412) aus demselben Material bestehen.

3. Elektronische Vorrichtung (100) nach einem der Ansprüche 1 oder 2, wobei der Ablöseteil (413, 461) so angeordnet ist, dass er durch einen Trennteil, der an einem Grenzteil eines benachbarten Bereichs der Schutzschicht (412, 460) ausgebildet ist, ablösbar ist.

4. Elektronische Vorrichtung (100) nach Anspruch 3, wobei der Trennteil mindestens eine Trennnut umfasst, die tiefer als der benachbarte Bereich von einer Oberfläche der Schutzschicht (412, 460), die der Außenseite der elektronischen Vorrichtung (100) zugewandt ist, und/oder einer Oberfläche der Schutzschicht (412, 460), die der Innenseite der elektronischen Vorrichtung (100) zugewandt ist, ausgebildet ist.

5. Elektronische Vorrichtung (100) nach Anspruch 3, wobei der Trennteil einen Mantelbereich oder einen Stanzbereich umfasst, der den Ablöseteil (413, 461) und den benachbarten Bereich voneinander trennt.

6. Elektronische Vorrichtung (100) nach einem der Ansprüche 1 bis 5, wobei der Ablöseteil (413) durch einen Trennraum angeordnet ist, der den Ablöseteil (413, 461) von dem benachbarten Bereich in bestimmten Abständen trennt.

7. Elektronische Vorrichtung (100) nach einem der Ansprüche 1 bis 6, die ferner eine Zwischenschutzschicht (411) umfasst, die aus einem ersten Material zusammengesetzt ist und zwischen der Oberfläche der Fensterschicht (410), die der Außenseite der elektronischen Vorrichtung (100) zugewandt ist, und der Oberfläche der Schutzschicht (412), die der Innenseite der elektronischen Vorrichtung (100) zugewandt ist, laminiert ist.

8. Elektronische Vorrichtung (100) nach Anspruch 7, wobei das erste Material Polyethylenterephthalat, PET, oder Polyimid, PI, umfasst.

9. Elektronische Vorrichtung (100) nach Anspruch 7 oder 8, wobei die Schutzschicht (412) aus einem zweiten Material zusammengesetzt ist, das thermoplastisches Polyurethan, TPU, umfasst.

10. Elektronische Vorrichtung (100) nach einem der Ansprüche 7 bis 9, wobei die Zwischenschutzschicht (411) so angeordnet ist, dass ein Rand der Zwischenschutzschicht (411) von außen durch das Gehäuse (110, 120) nicht sichtbar ist.

11. Elektronische Vorrichtung (100) nach einem der Ansprüche 7 bis 9, wobei die Zwischenschutzschicht (411) und die Schutzschicht (412) so angeordnet sind, dass Ränder der Zwischenschutzschicht (411) und der Schutzschicht (412) von außen durch das Gehäuse (110, 120) nicht sichtbar sind.

12. Elektronische Vorrichtung (100) nach Anspruch 7, wobei der Ablöseteil (413) auf mindestens einem Teil eines auf der Schutzschicht (412) ausgebildeten Durchgangslochs angeordnet ist, das mindestens den Betrachtungswinkel der Kameravorrichtung überlappt.

13. Elektronische Vorrichtung (100) nach einem der Ansprüche 7 bis 13, wobei der Ablöseteil (413) aus dem ersten Material ausgebildet ist.

14. Elektronische Vorrichtung (100) nach einem der Ansprüche 1 bis 13, wobei die Fensterschicht (410) aus Glas oder Polymer ausgebildet ist.

15. Elektronische Vorrichtung (100) nach einem der Ansprüche 1 bis 14, wobei die flexible Anzeige (400) ferner mindestens eine Untermaterialschicht (440) umfasst, die auf eine Rückseite der Anzeigetafel (430) laminiert ist, und
die Untermaterialschicht (440) eine zweite Öffnung (441) aufweist, die ausgebildet ist, um zumindest einen Teil der Kameravorrichtung (500) in einem Bereich aufzunehmen, der der ersten Öffnung (431) entspricht.

## Revendications

1. Dispositif électronique (100) comprenant :
un boîtier (110, 120);
un affichage flexible (400) disposé de manière à être visible depuis l'extérieur du dispositif électronique (100) à travers au moins une partie du boîtier (110, 120), l'affichage flexible (400) comprenant:
un panneau d'affichage (430) comprenant une première ouverture (431, OP1);
une couche de fenêtre (410) laminée sur une surface de le panneau d'affichage (430) orientée vers l'extérieur du dispositif électronique (100) ; et
une couche de protection (412, 460) laminée sur une surface de la couche de fenêtre (410) orientée vers l'extérieur du dispositif électronique (100) ; et
un dispositif de caméra (500) disposé de manière à être sensiblement aligné avec la première ouverture (431, OP1),
**caractérisé en ce que**
lorsque l'affichage flexible (400) est vu de l'extérieur, la couche de protection (412, 460) comprend une partie de peeling (413, 461) configurée pour chevaucher au moins un angle d'affichage du dispositif de caméra (500) et disposée de manière à pouvoir être séparée de la couche de protection (412, 460).

2. Dispositif électronique (100) de la revendication 1, dans lequel la partie de peeling (413, 461) et la couche de protection (412) sont composées du même matériau.

3. Dispositif électronique (100) de l'une quelconque des revendications 1 ou 2, dans lequel la partie de peeling (413, 461) est disposée pour être séparable à travers une partie de séparation formée sur une partie de limite d'une zone voisine de la couche de protection (412, 460).

4. Dispositif électronique (100) de la revendication 3, dans lequel la partie de séparation comprend au moins une rainure de séparation formée plus bas que la zone voisine à partir d'une surface de la couche de protection (412, 460) orientée vers l'extérieur du dispositif électronique (100) et/ou d'une surface de la couche de protection (412, 460) orientée vers l'intérieur du dispositif électronique (100).

5. Dispositif électronique (100) de la revendication 3, dans lequel la partie de séparation comprend une zone de gaine ou une zone de poinçonnage divisant la partie de peeling (413, 461) et la zone voisine l'une de l'autre.

6. Dispositif électronique (100) de l'une des revendications 1 à 5, dans lequel la partie de peeling (413) est disposée à travers un espace de séparation séparant la partie de peeling (413, 461) de la zone voisine à des intervalles désignés.

7. Dispositif électronique (100) de l'une quelconque des revendications 1 à 6, comprenant en outre une couche de protection intermédiaire (411), composée d'un premier matériau, étant stratifiée entre la surface de la couche de fenêtre (410) orientée vers l'extérieur du dispositif électronique (100) et la surface de la couche de protection (412) orientée vers l'intérieur du dispositif électronique (100).

8. Dispositif électronique (100) de la revendication 7, dans lequel le premier matériau comprend du polyéthylène téréphtalate, PET, ou du polyimide, PI.

9. Dispositif électronique (100) de la revendication 7 ou 8, dans lequel la couche de protection (412) est composée d'un deuxième matériau comprenant du polyuréthane thermoplastique, TPU.

10. Dispositif électronique (100) de l'une des revendications 7 à 9, dans lequel la couche de protection intermédiaire (411) est disposée de manière à ce qu'un bord de la couche de protection intermédiaire (411) ne soit pas vu de l'extérieur à travers le boîtier (110, 120).

11. Dispositif électronique (100) de l'une des revendications 7 à 9, dans lequel la couche de protection intermédiaire (411) et la couche de protection (412) sont disposées de manière à ce que des bords de la couche de protection intermédiaire (411) et de la couche de protection (412) ne soient pas vus de l'extérieur à travers le boîtier (110, 120).

12. Dispositif électronique (100) de la revendication 7, dans lequel la partie de peeling (413) est disposée sur au moins une partie d'un trou traversant formé sur la couche de protection (412), chevauchant au moins l'angle de vision du dispositif de caméra.

13. Dispositif électronique (100) de l'une quelconque des revendications 7 à 13, dans lequel la partie de peeling (413) est formée du premier matériau.

14. Dispositif électronique (100) de l'une quelconque des revendications 1 à 13, dans lequel la couche de fenêtre (410) est formée de verre ou de polymère.

15. Dispositif électronique (100) de l'une des revendications 1 à 14, dans lequel l'affichage flexible (400) comprend en outre au moins une couche de sous-matériau (440) laminée sur une surface arrière du panneau d'affichage (430), et
la couche de sous-matériau (440) comprend une deuxième ouverture (441) formée pour accueillir au moins une partie du dispositif de caméra (500) dans une zone correspondant à la première ouverture (431).
